# EUROPEAN PATENT APPLICATION

(11) **EP 4 130 912 A1**
(43) Date of publication of application: **08.02.2023**
(21) Application number: 21781613.1
(22) Date of filing: 23.03.2021
(51) Int. Cl.: G05B 23/02, F24F 11/38

(54) **DIAGNOSTIC SYSTEM**

(30) Priority: 30.03.2020 JP 2020060824
(71) Applicant: Daikin Industries, Ltd., Osaka-shi, Osaka 530-0001 (JP)
(72) Inventor: KAMIAKA, Shouya, Osaka-shi, Osaka 530-8323 (JP); HOSHI, Masatoshi, Osaka-shi, Osaka 530-8323 (JP)
(74) Representative: Conti, Marco
(86) International application number: PCT/JP2021/011979
(87) International publication number: WO 2021/200399

(57) **Abstract**

There is a problem that information relating to a diagnostic logic that could not be executed is not displayed in a diagnostic system for diagnosing an abnormality of a diagnostic object. A diagnostic system (200) diagnoses an abnormality of a diagnostic object by using a plurality of diagnostic logics (215). The diagnostic system (200) includes an acquisition unit (212), a determination unit (214), a generation unit (216), and an output unit (219). The acquisition unit (212) acquires diagnostic object information (213) that is information relating to the diagnostic object. The determination unit (214) determines whether each of the diagnostic logics (215) is executable or not based on the diagnostic object information (213). The generation unit (216) generates a diagnostic result (217) including information relating to whether the diagnostic logics (215) determined by the determination unit (214) are executable or not. The output unit (219) outputs the diagnostic result (217).

## Description

### TECHNICAL FIELD

The present disclosure relates to a diagnostic system.

### BACKGROUND ART

As disclosed in PTL 1 (Japanese Unexamined Patent Application Publication No. 2019-16209), a diagnostic system of related art prepares diagnostic logics for diagnosing whether a diagnostic object is normal/abnormal and data for executing the diagnostic logics, and executes the diagnostic logics on the data to determine whether the diagnostic object is normal or not.

### SUMMARY OF INVENTION

### <Technical Problem>

In PTL 1, information relating to the diagnostic logics that could not be executed because the data could not be acquired is not displayed. Thus, there is a problem that, although the diagnostic result is normal, a user is not able to determine whether the diagnostic result is normal or not while the number of the diagnostic logics that could not be executed is small.

### <Solution to Problem>

A diagnostic system according to a first aspect diagnoses an abnormality of a diagnostic object by using a plurality of diagnostic logics. The diagnostic system includes an acquisition unit, a determination unit, a generation unit, and an output unit. The acquisition unit acquires diagnostic object information that is information relating to the diagnostic object. The determination unit determines whether each of the diagnostic logics is executable or not based on the diagnostic object information. The generation unit generates a diagnostic result including information relating to whether the diagnostic logics determined by the determination unit are executable or not. The output unit outputs the diagnostic result.

In the diagnostic system according to the first aspect, the acquisition unit acquires diagnostic object information that is information relating to a diagnostic object. The determination unit determines whether each of the diagnostic logics is executable or not based on the diagnostic object information. The generation unit generates a diagnostic result including information relating to whether the diagnostic logics determined by the determination unit are executable or not. The output unit outputs the diagnostic result. Thus, the diagnostic result includes the information relating to the diagnostic logics that could not be executed, and a user can more accurately recognize the diagnostic result.

A diagnostic system according to a second aspect is the diagnostic system according to the first aspect, in which the determination unit determines whether the diagnostic logics are executable or not based on presence or absence of data to be used in the diagnostic logics and/or whether the data is convertible or not.

A diagnostic system according to a third aspect is the diagnostic system according to any of the first aspect or the second aspect, in which the diagnostic object information includes model information. The determination unit selects the diagnostic logics based on the model information.

A diagnostic system according to a fourth aspect is the diagnostic system according to any of the first aspect to the third aspect, in which the information relating to whether the diagnostic logics are executable or not includes at least one of a number of the diagnostic logics that could be executed, a ratio of the diagnostic logics that could be executed, a number of the diagnostic logics that could not be executed, and a ratio of the diagnostic logics that could not be executed.

A diagnostic system according to a fifth aspect is the diagnostic system according to any of the first aspect to the fourth aspect, in which the generation unit further generates a work instruction corresponding to the diagnostic result. The output unit further outputs the work instruction.

A diagnostic system according to a sixth aspect is the diagnostic system according to any of the first aspect to the fifth aspect, in which the output unit further outputs the diagnostic object with a high ratio of the diagnostic logics that could not be executed in an emphasized manner.

### BRIEF DESCRIPTION OF DRAWINGS

Fig. 1 is a functional block diagram of a diagnostic system.
Fig. 2 is a schematic configuration diagram of an air conditioner that is a diagnostic object of the diagnostic system.
Fig. 3 is a diagram illustrating an example of a diagnostic result and a work instruction output to an output device.
Fig. 4 is a flowchart of a diagnostic process.
Fig. 5 is a schematic configuration diagram of an air conditioner that is of a central air conditioning system.

### DESCRIPTION OF EMBODIMENTS

### (1) General Configuration

A diagnostic system 200 of the present embodiment and an air conditioner 100 that is a diagnostic object of the diagnostic system 200 of the present embodiment will be described. Note that while the diagnostic object of the present embodiment is the air conditioner 100, the diagnostic object is not limited to the air conditioner 100. Also, while the diagnostic object of the present embodiment is the air conditioner 100 in a broad sense, the diagnostic object is a device such as a compressor 21 constituting the air conditioner 100 in a narrow sense.

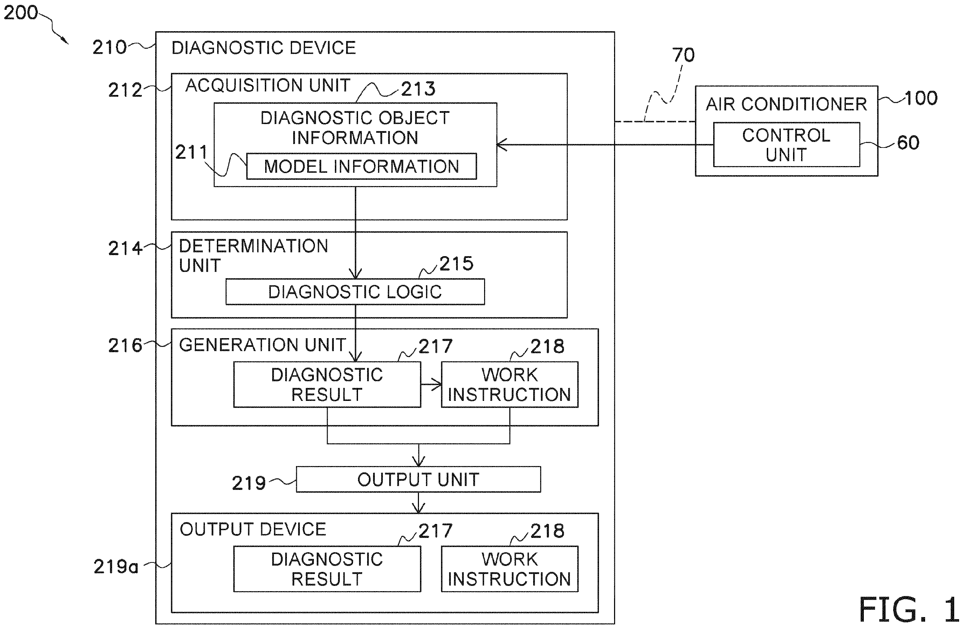

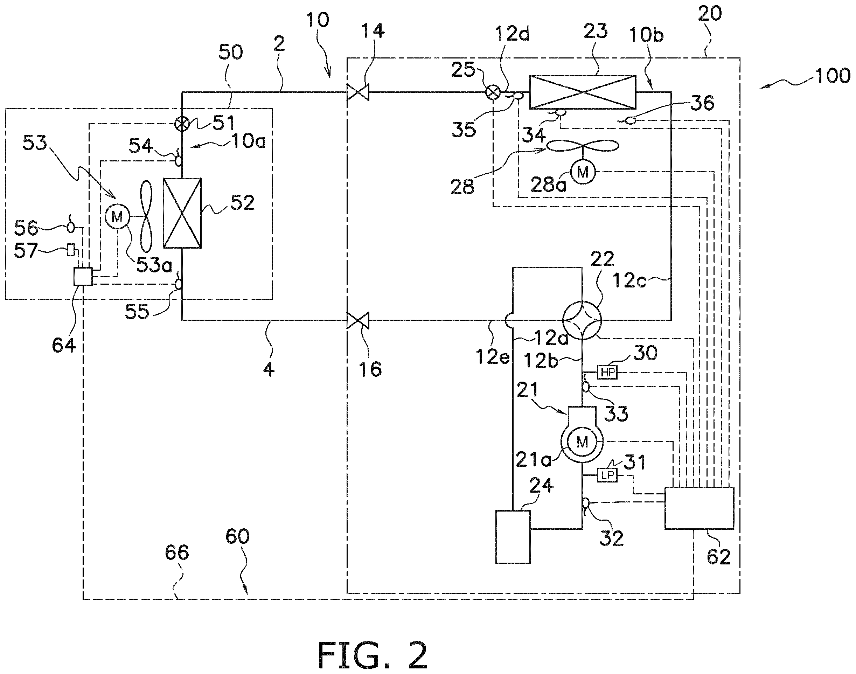

Fig. 1 is a functional block diagram of the diagnostic system 200. Fig. 2 is a schematic configuration diagram of the air conditioner 100 that is the diagnostic object of the diagnostic system 200.

As illustrated in Fig. 2, the air conditioner 100 is an example of a refrigeration cycle apparatus. The air conditioner 100 is an apparatus using a vapor compression refrigeration cycle. The air conditioner 100 performs cooling or heating of a space to be air-conditioned.

The diagnostic system 200 uses a plurality of diagnostic logics 215 to diagnose an abnormality of the air conditioner 100 that is the diagnostic object. As illustrated in Fig. 1, the diagnostic system 200 mainly includes a diagnostic device 210 having a function of diagnosing an abnormality of the air conditioner 100. The diagnostic device 210 is a computer communicably connected to the air conditioner 100.

### (2) Detailed Configuration

### (2-1) Air Conditioner

As illustrated in Fig. 2, the air conditioner 100 mainly includes one heat source unit 20, one use unit 50, a liquid refrigerant connection pipe 2, a gas refrigerant connection pipe 4, and a control unit 60. The liquid refrigerant connection pipe 2 and the gas refrigerant connection pipe 4 are pipes that connect the heat source unit 20 and the use unit 50 to each other. The control unit 60 controls operations of various devices and various components of the heat source unit 20 and the use unit 50. Although the air conditioner 100 of the present embodiment includes the one use unit 50, the number of use units 50 is not limited to one, and may be plural. Although the air conditioner 100 of the present embodiment includes the one heat source unit 20, the number of heat source units 20 is not limited to one, and may be plural.

The heat source unit 20 and the use unit 50 constitute a refrigerant circuit 10 by being connected via the liquid refrigerant connection pipe 2 and the gas refrigerant connection pipe 4. The refrigerant circuit 10 includes a compressor 21, a flow direction switching mechanism 22, a heat-source-side heat exchanger 23, and a heat-source-side expansion valve 25 of the heat source unit 20. In addition, the refrigerant circuit 10 includes a use-side heat exchanger 52 and a use-side expansion valve 51 of the use unit 50.

The air conditioner 100 has, as main operating modes, a cooling operation mode for executing a cooling operation and a heating operation mode for executing a heating operation. The cooling operation is an operation in which the heat-source-side heat exchanger 23 is caused to function as a radiator of a refrigerant, the use-side heat exchanger 52 is caused to function as an evaporator of the refrigerant, and air in a space in which the use unit 50 is installed is cooled. The heating operation is an operation in which the heat-source-side heat exchanger 23 is caused to function as an evaporator of the refrigerant, the use-side heat exchanger 52 is caused to function as a radiator of the refrigerant, and the air in the space in which the use unit 50 is installed is heated.

### (2-1-1) Use Unit

The use unit 50 is a unit installed in the space to be air-conditioned. For example, the use unit 50 is a ceiling embedded unit.

As illustrated in Fig. 2, the use unit 50 is connected to the heat source unit 20 via the liquid refrigerant connection pipe 2 and the gas refrigerant connection pipe 4, and constitutes a part of the refrigerant circuit 10.

The use unit 50 has a use-side refrigerant circuit 10a constituting a part of the refrigerant circuit 10.

The use unit 50 mainly includes the use-side expansion valve 51, the use-side heat exchanger 52, a use-side fan 53, various sensors, and a use-side control unit 64. The various sensors included in the use unit 50 will be described later.

### (2-1-1-1) Use-side Expansion Valve

The use-side expansion valve 51 is a mechanism for adjusting the pressure or flow rate of the refrigerant flowing through the use-side refrigerant circuit 10a. The use-side expansion valve 51 is provided in a refrigerant pipe that connects the liquid side of the use-side heat exchanger 52 and the liquid refrigerant connection pipe 2. The use-side expansion valve 51 is, for example, an electronic expansion valve whose opening degree can be adjusted.

### (2-1-1-2) Use-side Heat Exchanger

In the use-side heat exchanger 52, heat exchange is performed between the refrigerant flowing through the use-side heat exchanger 52 and the air in the space to be air-conditioned. The use-side heat exchanger 52 is, for example, a fin-and-tube heat exchanger including a plurality of heat transfer tubes and a plurality of fins.

One end of the use-side heat exchanger 52 is connected to the liquid refrigerant connection pipe 2 via the refrigerant pipe. The other end of the use-side heat exchanger 52 is connected to the gas refrigerant connection pipe 4 via a refrigerant pipe. During the cooling operation, the refrigerant flows into the use-side heat exchanger 52 from the liquid refrigerant connection pipe 2 side, and the use-side heat exchanger 52 functions as an evaporator of the refrigerant. During the heating operation, the refrigerant flows into the use-side heat exchanger 52 from the gas refrigerant connection pipe 4 side, and the use-side heat exchanger 52 functions as a radiator of the refrigerant.

### (2-1-1-3) Use-side Fan

The use-side fan 53 is a fan that supplies air to the use-side heat exchanger 52. The use-side fan 53 is, for example, a centrifugal fan such as a turbo fan or a sirocco fan. The use-side fan 53 is driven by a fan motor 53a. The number of rotations of the fan motor 53a can be controlled by an inverter.

### (2-1-1-4) Sensors

As illustrated in Fig. 2, the use unit 50 includes a liquid-side temperature sensor 54, a gas-side temperature sensor 55, a space temperature sensor 56, and a space humidity sensor 57 as sensors.

The liquid-side temperature sensor 54 is provided in the refrigerant pipe that connects the liquid side of the use-side heat exchanger 52 and the liquid refrigerant connection pipe 2. The liquid-side temperature sensor 54 measures the temperature of the refrigerant flowing through the refrigerant pipe on the liquid side of the use-side heat exchanger 52.

The gas-side temperature sensor 55 is provided in the refrigerant pipe that connects the gas side of the use-side heat exchanger 52 and the gas refrigerant connection pipe 4. The gas-side temperature sensor 55 measures the temperature of the refrigerant flowing through the refrigerant pipe on the gas side of the use-side heat exchanger 52.

The space temperature sensor 56 is provided on the air intake side of a casing (not illustrated) of the use unit 50. The space temperature sensor 56 detects the temperature (space temperature Tr) of the air in the space to be air-conditioned that flows into the casing of the use unit 50.

The space humidity sensor 57 is provided on the air intake side of the casing (not illustrated) of the use unit 50. The space humidity sensor 57 detects the humidity (space humidity Hr) of the air in the space to be air-conditioned that flows into the casing of the use unit 50.

### (2-1-1-5) Use-side Control Unit

The use-side control unit 64 controls operations of components constituting the use unit 50.

The use-side control unit 64 includes a microcomputer provided for controlling the use unit 50, a memory in which a control program executable by the microcomputer is stored, and the like.

As illustrated in Fig. 2, the use-side control unit 64 is electrically connected to the use-side expansion valve 51, the use-side fan 53, the liquid-side temperature sensor 54, the gas-side temperature sensor 55, the space temperature sensor 56, and the space humidity sensor 57 so as to be able to transmit and receive control signals and information.

The use-side control unit 64 is configured to be able to receive various signals transmitted from a remote controller (not illustrated) for operating the use unit 50. The various signals transmitted from the remote controller include signals for instructing operation/stop of the use unit 50 and signals relating to various settings. The signals relating to the various settings include, for example, an operating mode switching signal, and signals relating to a set temperature Trs and a set humidity Hrs of the cooling operation or the heating operation.

The use-side control unit 64 is connected to a heat-source-side control unit 62 of the heat source unit 20 via a transmission line 66 in a state in which control signals and the like can be transmitted and received. Note that the use-side control unit 64 and the heat-source-side control unit 62 need not be connected by the physical transmission line 66, and may be communicably connected wirelessly. The use-side control unit 64 and the heat-source-side control unit 62 cooperate to function as the control unit 60 that controls the entire operation of the air conditioner 100. The control unit 60 will be described later.

### (2-1-2) Heat Source Unit

The heat source unit 20 is installed outside the space to be air-conditioned. The heat source unit 20 is installed, for example, on the rooftop of a building in which the air conditioner 100 is installed or at a location adjacent to the building.

As illustrated in Fig. 2, the heat source unit 20 is connected to the use unit 50 via the liquid refrigerant connection pipe 2 and the gas refrigerant connection pipe 4. The heat source unit 20 constitutes the refrigerant circuit 10 together with the use unit 50.

The heat source unit 20 has a heat-source-side refrigerant circuit 10b constituting a part of the refrigerant circuit 10.

The heat source unit 20 mainly includes the compressor 21, the flow direction switching mechanism 22, the heat-source-side heat exchanger 23, the heat-source-side expansion valve 25, an accumulator 24, a liquid-side shutoff valve 14, a gas-side shutoff valve 16, a heat-source-side fan 28, various sensors, and the heat-source-side control unit 62. The various sensors included in the heat source unit 20 will be described later.

The heat source unit 20 includes a suction pipe 12a, a discharge pipe 12b, a first gas refrigerant pipe 12c, a liquid refrigerant pipe 12d, and a second gas refrigerant pipe 12e. The suction pipe 12a connects the flow direction switching mechanism 22 and the suction side of the compressor 21 to each other. The accumulator 24 is provided in the suction pipe 12a. The discharge pipe 12b connects the discharge side of the compressor 21 and the flow direction switching mechanism 22 to each other. The first gas refrigerant pipe 12c connects the flow direction switching mechanism 22 and the gas side of the heat-source-side heat exchanger 23 to each other. The liquid refrigerant pipe 12d connects the liquid side of the heat-source-side heat exchanger 23 and the liquid refrigerant connection pipe 2 to each other. The heat-source-side expansion valve 25 is provided at the liquid refrigerant pipe 12d. The liquid-side shutoff valve 14 is provided at a connection portion between the liquid refrigerant pipe 12d and the liquid refrigerant connection pipe 2. The second gas refrigerant pipe 12e connects the flow direction switching mechanism 22 and the gas refrigerant connection pipe 4 to each other. The gas-side shutoff valve 16 is provided at a connection portion between the second gas refrigerant pipe 12e and the gas refrigerant connection pipe 4.

### (2-1-2-1) Compressor

As illustrated in Fig. 2, the compressor 21 is a device that sucks a low-pressure refrigerant in the refrigeration cycle from the suction pipe 12a, compresses the refrigerant by a compression mechanism (not illustrated), and discharges the compressed refrigerant to the discharge pipe 12b.

The compressor 21 is, for example, a rotary type or scroll type positive-displacement compressor. The compression mechanism (not illustrated) of the compressor 21 is driven by a compressor motor 21a. When the compression mechanism (not illustrated) is driven by the compressor motor 21a, the refrigerant is compressed by the compression mechanism (not illustrated). The compressor motor 21a is a motor whose number of rotations can be controlled by an inverter. The capacity of the compressor 21 is controlled by controlling the number of rotations of the compressor motor 21a.

### (2-1-2-2) Flow Direction Switching Mechanism

The flow direction switching mechanism 22 is a mechanism that changes the state of the refrigerant circuit 10 between a first state and a second state by switching the flow direction of the refrigerant. When the refrigerant circuit 10 is in the first state, the heat-source-side heat exchanger 23 functions as a radiator of the refrigerant, and the use-side heat exchanger 52 functions as an evaporator of the refrigerant. When the refrigerant circuit 10 is in the second state, the heat-source-side heat exchanger 23 functions as an evaporator of the refrigerant, and the use-side heat exchanger 52 functions as a radiator of the refrigerant.

In the present embodiment, the flow direction switching mechanism 22 is a four-way switching valve.

During the cooling operation, the flow direction switching mechanism 22 sets the state of the refrigerant circuit 10 to the first state. In other words, during the cooling operation, the flow direction switching mechanism 22 causes the suction pipe 12a to communicate with the second gas refrigerant pipe 12e, and causes the discharge pipe 12b to communicate with the first gas refrigerant pipe 12c, as indicated by solid lines in the flow direction switching mechanism 22 in Fig. 2.

During the heating operation, the flow direction switching mechanism 22 sets the state of the refrigerant circuit 10 to the second state. In other words, during the heating operation, the flow direction switching mechanism 22 causes the suction pipe 12a to communicate with the first gas refrigerant pipe 12c, and causes the discharge pipe 12b to communicate with the second gas refrigerant pipe 12e, as indicated by broken lines in the flow direction switching mechanism 22 in Fig. 2.

### (2-1-2-3) Heat-source-side Heat Exchanger

In the heat-source-side heat exchanger 23, heat exchange is performed between the refrigerant flowing inside the heat-source-side heat exchanger 23 and air (heat source air) at the installation location of the heat source unit 20. When the heat source unit 20 is installed outdoors, heat exchange is performed in the heat-source-side heat exchanger 23, between the refrigerant flowing inside the heat-source-side heat exchanger 23 and outdoor air.

The heat-source-side heat exchanger 23 is, for example, a fin-and-tube heat exchanger including a plurality of heat transfer tubes and a plurality of fins.

One end of the heat-source-side heat exchanger 23 is connected to the liquid refrigerant pipe 12d. The other end of the heat-source-side heat exchanger 23 is connected to the first gas refrigerant pipe 12c.

The heat-source-side heat exchanger 23 functions as a radiator of the refrigerant during the cooling operation, and functions as an evaporator of the refrigerant during the heating operation.

### (2-1-2-4) Heat-source-side Expansion Valve

The heat-source-side expansion valve 25 is a mechanism for adjusting the pressure or flow rate of the refrigerant flowing through the liquid refrigerant pipe 12d. As illustrated in Fig. 2, the heat-source-side expansion valve 25 is provided in the liquid refrigerant pipe 12d. The heat-source-side expansion valve 25 is, for example, an electronic expansion valve whose opening degree can be adjusted.

### (2-1-2-5) Accumulator

The accumulator 24 has a gas-liquid separation function of separating the refrigerant flowing therein into a gas refrigerant and a liquid refrigerant. Also, the accumulator 24 is a container having a storage function of storing an excessive refrigerant generated in accordance with fluctuations in operation load of the use unit 50 and the like. As illustrated in Fig. 2, the accumulator 24 is provided in the suction pipe 12a. The refrigerant flowing into the accumulator 24 is separated into the gas refrigerant and the liquid refrigerant, and the gas refrigerant collected in an upper space flows out to the compressor 21.

### (2-1-2-6) Liquid-side Shutoff Valve and Gas-side Shutoff Valve

The liquid-side shutoff valve 14 is a valve provided at the connection portion between the liquid refrigerant pipe 12d and the liquid refrigerant connection pipe 2. The gas-side shutoff valve 16 is a valve provided at the connection portion between the second gas refrigerant pipe 12e and the gas refrigerant connection pipe 4. The liquid-side shutoff valve 14 and the gas-side shutoff valve 16 are, for example, manually operated valves.

### (2-1-2-7) Heat-source-side Fan

The heat-source-side fan 28 is a fan that supplies air to the heat-source-side heat exchanger 23. Specifically, the heat-source-side fan 28 is a fan for taking in the heat source air outside the heat source unit 20 to a casing (not illustrated) of the heat source unit 20, supplying the heat source air to the heat-source-side heat exchanger 23, and discharging the air heat-exchanged with the refrigerant in the heat-source-side heat exchanger 23 to the outside of the casing of the heat source unit 20. The heat-source-side fan 28 is, for example, a propeller fan. The heat-source-side fan 28 is driven by a fan motor 28a. The number of rotations of the fan motor 28a can be controlled by an inverter.

### (2-1-2-8) Sensors

As illustrated in Fig. 2, the heat source unit 20 includes a discharge pressure sensor 30, a suction pressure sensor 31, a suction temperature sensor 32, a discharge temperature sensor 33, a heat exchange temperature sensor 34, a liquid-side temperature sensor 35, and a heat source air temperature sensor 36 as sensors.

The discharge pressure sensor 30 is provided in the discharge pipe 12b. The discharge pressure sensor 30 is a sensor that measures a discharge pressure Pd.

The suction pressure sensor 31 is provided in the suction pipe 12a. The suction pressure sensor 31 is a sensor that measures a suction pressure Ps.

The suction temperature sensor 32 is provided in the suction pipe 12a. The suction temperature sensor 32 is a sensor that measures a suction temperature Ts.

The discharge temperature sensor 33 is provided in the discharge pipe 12b. The discharge temperature sensor 33 is a sensor that measures a discharge temperature Td.

The heat exchange temperature sensor 34 is provided in the heat-source-side heat exchanger 23. The heat exchange temperature sensor 34 measures the temperature of the refrigerant flowing through the heat-source-side heat exchanger 23. The heat exchange temperature sensor 34 measures a refrigerant temperature corresponding to a condensation temperature Tc during the cooling operation, and measures a refrigerant temperature corresponding to an evaporation temperature Te during the heating operation.

The liquid-side temperature sensor 35 is provided in the liquid refrigerant pipe 12d and measures a temperature Tl of the refrigerant flowing through the liquid refrigerant pipe 12d. When the state of the heat-source-side heat exchanger 23 is switched to the first state, a subcooling degree SCr of the refrigeration cycle is calculated by subtracting the temperature Tl of the refrigerant measured by the liquid-side temperature sensor 35 from the condensation temperature Tc measured by the heat exchange temperature sensor 34.

The heat source air temperature sensor 36 measures the temperature of the heat source air.

### (2-1-2-9) Heat-source-side Control Unit

The heat-source-side control unit 62 controls operations of components constituting the heat source unit 20.

The heat-source-side control unit 62 includes a microcomputer provided for controlling the heat source unit 20, a memory in which a control program executable by the microcomputer is stored, and the like.

As illustrated in Fig. 2, the heat-source-side control unit 62 is electrically connected to the compressor 21, the flow direction switching mechanism 22, the heat-source-side expansion valve 25, the heat-source-side fan 28, the discharge pressure sensor 30, the suction pressure sensor 31, the suction temperature sensor 32, the discharge temperature sensor 33, the heat exchange temperature sensor 34, the liquid-side temperature sensor 35, and the heat source air temperature sensor 36 so as to be able to transmit and receive control signals and information.

The heat-source-side control unit 62 is connected to the use-side control unit 64 of the use unit 50 via the transmission line 66 in a state in which control signals and the like can be transmitted and received. The heat-source-side control unit 62 and the use-side control unit 64 cooperate to function as the control unit 60 that controls the entire operation of the air conditioner 100. The control unit 60 will be described later.

### (2-1-3) Refrigerant Connection Pipes

The air conditioner 100 includes the liquid refrigerant connection pipe 2 and the gas refrigerant connection pipe 4 as refrigerant connection pipes. The use-side refrigerant circuit 10a of the use unit 50 and the heat-source-side refrigerant circuit 10b of the heat source unit 20 are connected to each other by the liquid refrigerant connection pipe 2 and the gas refrigerant connection pipe 4, thereby constituting the refrigerant circuit 10 of the air conditioner 100.

### (2-1-4) Control Unit

The control unit 60 is configured such that the heat-source-side control unit 62 of the heat source unit 20 and the use-side control unit 64 of the use unit 50 are communicably connected via the transmission line 66. The control unit 60 controls the entire operation of the air conditioner 100 by the microcomputer of the heat-source-side control unit 62 or the use-side control unit 64 executing the program stored in the memory.

As illustrated in Fig. 2, the control unit 60 is electrically connected to various devices of the heat source unit 20 and the use unit 50, including the compressor 21, the flow direction switching mechanism 22, the heat-source-side expansion valve 25, the heat-source-side fan 28, the use-side expansion valve 51, and the use-side fan 53. As illustrated in Fig. 2, the control unit 60 is electrically connected to the various sensors 30 to 36 provided in the heat source unit 20 and to the various sensors 54 to 57 provided in the use unit 50.

The control unit 60 controls operation and stop of the air conditioner 100 and operations of the various devices of the air conditioner 100 based on measurement signals of the various sensors 30 to 36 and 54 to 57, commands received by the use-side control unit 64 from the remote controller (not illustrated), and the like.

Also, the control unit 60 is communicably connected to the diagnostic device 210 of the diagnostic system 200 via a communication line 70. The communication line 70 may be wired or wireless. The control unit 60 transmits measurement values of the sensors 30 to 36 and 54 to 57 to the diagnostic device 210 via the communication line 70. Also, the control unit 60 transmits information on the number of rotations of the compressor motor 21a of the compressor 21, the number of rotations of the fan motor 28a of the heat-source-side fan 28, and the number of rotations of the fan motor 53a of the use-side fan 53 to the diagnostic device 210. Also, the control unit 60 transmits information relating to other control to the diagnostic device 210. The information relating to other control is, for example, operation/stop information on the use unit 50, the opening degree of the use-side expansion valve 51, the frequency of current drooping control in an inverter circuit of the compressor motor 21a, and the like. Also, the control unit 60 transmits model information 211 to the diagnostic device 210. The model information 211 is information on such as models of the heat source unit 20 and the use unit 50. Hereinafter, the information to be transmitted from the control unit 60 to the diagnostic device 210 is referred to as diagnostic object information 213.

The control unit 60 transmits the diagnostic object information 213 to the diagnostic device 210 at a predetermined time interval. The predetermined time interval is, for example, every one minute. In this case, the diagnostic object information 213 at each time is labeled with time information.

Also, the control unit 60 may accumulate the diagnostic object information 213 for a predetermined period in the memory, and may collectively transmit the diagnostic object information 213 to the diagnostic device 210. The predetermined period is, for example, three days. For example, the control unit 60 transmits the diagnostic object information 213 stored every one minute for the last three days to the diagnostic device 210 as a CSV file.

### (2-1-5) Operations of Air Conditioner

Control on the operations of the air conditioner 100 during the cooling operation and the heating operation will be described.

### (2-1-5-1) Operation during Cooling Operation

When execution of the cooling operation is instructed to the air conditioner 100, the control unit 60 sets the operating mode of the air conditioner 100 to the cooling operation mode. The control unit 60 controls the flow direction switching mechanism 22 to the state indicated by the solid lines in Fig. 2 and operates the compressor 21, the heat-source-side fan 28, and the use-side fan 53 so that the state of the refrigerant circuit 10 becomes the above-described first state.

During the cooling operation, the control unit 60 controls the devices of the air conditioner 100, for example, as follows.

The control unit 60 controls the number of rotations of the fan motor 28a that drives the heat-source-side fan 28 and the number of rotations of the fan motor 53a that drives the use-side fan 53 to predetermined numbers of rotations. For example, the control unit 60 controls the number of rotations of the fan motor 28a to the maximum number of rotations. The control unit 60 appropriately controls the number of rotations of the fan motor 53a based on an air volume instruction or the like input to the remote controller.

The control unit 60 fully opens the heat-source-side expansion valve 25. The control unit 60 adjusts the opening degree of the use-side expansion valve 51 so that a superheating degree SHr of the refrigerant at a gas-side outlet of the use-side heat exchanger 52 becomes a predetermined target superheating degree SHrs. The superheating degree SHr of the refrigerant at the gas-side outlet of the use-side heat exchanger 52 is calculated, for example, by subtracting the measurement value of the liquid-side temperature sensor 54 (evaporation temperature Te) from the measurement value of the gas-side temperature sensor 55. The superheating degree SHr may be calculated based on the measurement value of another sensor.

The control unit 60 controls the operating capacity of the compressor 21 so that the evaporation temperature Te corresponding to the measurement value (suction pressure Ps) of the suction pressure sensor 31 approaches a target evaporation temperature Tes determined by the temperature difference between the space temperature Tr measured by the space temperature sensor 56 and the set temperature Trs. The operating capacity of the compressor 21 is controlled by controlling the number of rotations of the compressor motor 21a.

During the cooling operation, when the operations of the devices of the air conditioner 100 are controlled as described above, the refrigerant flows through the refrigerant circuit 10 as follows.

When the compressor 21 is activated, a low-pressure gas refrigerant in the refrigeration cycle is sucked into the compressor 21 and compressed by the compressor 21 to become a high-pressure gas refrigerant in the refrigeration cycle. The high-pressure gas refrigerant is sent to the heat-source-side heat exchanger 23 via the flow direction switching mechanism 22, exchanges heat with heat source air supplied by the heat-source-side fan 28, condenses, and becomes a high-pressure liquid refrigerant. The high-pressure liquid refrigerant flows through the liquid refrigerant pipe 12d and passes through the heat-source-side expansion valve 25. The high-pressure liquid refrigerant sent to the use unit 50 is decompressed to a pressure close to the suction pressure of the compressor 21 in the use-side expansion valve 51, becomes a refrigerant in a gas-liquid two-phase state, and is sent to the use-side heat exchanger 52. In the use-side heat exchanger 52, the refrigerant in the gas-liquid two-phase state exchanges heat with air in the space to be air-conditioned supplied to the use-side heat exchanger 52 by the use-side fan 53, evaporates, and becomes a low-pressure gas refrigerant. The low-pressure gas refrigerant is sent to the heat source unit 20 via the gas refrigerant connection pipe 4, and flows into the accumulator 24 via the flow direction switching mechanism 22. The low-pressure gas refrigerant flowing into the accumulator 24 is again sucked into the compressor 21. In contrast, the temperature of the air supplied to the use-side heat exchanger 52 is lowered by heat exchange with the refrigerant flowing through the use-side heat exchanger 52, and the air cooled by the use-side heat exchanger 52 is blown out to the space to be air-conditioned.

### (2-1-5-2) Operation during Heating Operation

When execution of the heating operation is instructed to the air conditioner 100, the control unit 60 sets the operating mode of the air conditioner 100 to the heating operation mode. The control unit 60 controls the flow direction switching mechanism 22 to the state indicated by the broken lines in Fig. 2 so that the state of the refrigerant circuit 10 becomes the above-described second state, and operates the compressor 21, the heat-source-side fan 28, and the use-side fan 53.

During the heating operation, the control unit 60 controls the devices of the air conditioner 100, for example, as follows.

The control unit 60 controls the number of rotations of the fan motor 28a that drives the heat-source-side fan 28 and the number of rotations of the fan motor 53a that drives the use-side fan 53 to predetermined numbers of rotations. For example, the control unit 60 controls the number of rotations of the fan motor 28a to the maximum number of rotations. The control unit 60 appropriately controls the number of rotations of the fan motor 53a based on an air volume instruction or the like input to the remote controller.

The control unit 60 adjusts the opening degree of the use-side expansion valve 51 so that the subcooling degree SCr of the refrigerant at a liquid-side outlet of the use-side heat exchanger 52 becomes a predetermined target subcooling degree SCrs. The subcooling degree SCr of the refrigerant at the liquid-side outlet of the use-side heat exchanger 52 is calculated, for example, by subtracting the measurement value of the liquid-side temperature sensor 54 from the condensation temperature Tc converted from the measurement value (discharge pressure Pd) of the discharge pressure sensor 30.

The control unit 60 adjusts the opening degree of the heat-source-side expansion valve 25 so that the refrigerant flowing into the heat-source-side heat exchanger 23 is decompressed to a pressure at which the refrigerant can evaporate in the heat-source-side heat exchanger 23.

The control unit 60 controls the operating capacity of the compressor 21 so that the condensation temperature Tc corresponding to the measurement value (discharge pressure Pd) of the discharge pressure sensor 30 approaches a target condensation temperature Tcs determined by the temperature difference between the space temperature Tr measured by the space temperature sensor 56 and the set temperature Trs. The operating capacity of the compressor 21 is controlled by controlling the number of rotations of the compressor motor 21a.

During the heating operation, when the operations of the devices of the air conditioner 100 are controlled as described above, the refrigerant flows through the refrigerant circuit 10 as follows.

When the compressor 21 is activated, a low-pressure gas refrigerant in the refrigeration cycle is sucked into the compressor 21 and compressed by the compressor 21 to become a high-pressure gas refrigerant in the refrigeration cycle. The high-pressure gas refrigerant is sent to the use-side heat exchanger 52 via the flow direction switching mechanism 22, exchanges heat with air in the space to be air-conditioned supplied by the use-side fan 53, condenses, and becomes a high-pressure liquid refrigerant. The temperature of the air supplied to the use-side heat exchanger 52 rises by heat exchange with the refrigerant flowing through the use-side heat exchanger 52, and the air heated by the use-side heat exchanger 52 is blown out to the space to be air-conditioned. The high-pressure liquid refrigerant flowing out of the use-side heat exchanger 52 passes through the use-side expansion valve 51 and is decompressed. The refrigerant decompressed in the use-side expansion valve 51 is sent to the heat source unit 20 via the liquid refrigerant connection pipe 2, and flows into the liquid refrigerant pipe 12d. The refrigerant flowing through the liquid refrigerant pipe 12d is decompressed to a pressure close to the suction pressure of the compressor 21 when passing through the heat-source-side expansion valve 25, becomes a refrigerant in a gas-liquid two-phase state, and flows into the heat-source-side heat exchanger 23. The low-pressure refrigerant in the gas-liquid two-phase state flowing into the heat-source-side heat exchanger 23 exchanges heat with heat source air supplied by the heat-source-side fan 28, evaporates, becomes a low-pressure gas refrigerant, and flows into the accumulator 24 via the flow direction switching mechanism 22. The low-pressure gas refrigerant flowing into the accumulator 24 is again sucked into the compressor 21.

### (2-2) Diagnostic Device

As illustrated in Fig. 1, the diagnostic device 210 is a computer communicably connected to the air conditioner 100 via the communication line 70. In the present embodiment, the diagnostic device 210 is assumed to be a user terminal such as a mobile PC or a tablet.

The diagnostic device 210 is communicably connected to the control unit 60 of the air conditioner 100. The diagnostic device 210 and the control unit 60 are connected to each other in a wired or wireless manner. The diagnostic device 210 may be installed at any location as long as the diagnostic device 210 is communicable with the air conditioner 100. When the diagnostic device 210 is installed next to the air conditioner 100, the diagnostic device 210 and the air conditioner 100 are connected by, for example, a USB cable or Bluetooth (registered trademark). When the diagnostic device 210 is installed in a building different from the installation location of the air conditioner 100, the diagnostic device 210 and the air conditioner 100 are connected to each other, for example, via an Internet line.

The diagnostic device 210 can receive the above-described diagnostic object information 213 from the control unit 60.

As illustrated in Fig. 1, the diagnostic device 210 mainly includes an acquisition unit 212, a determination unit 214, a generation unit 216, and an output unit 219. Further, the diagnostic device 210 includes a control arithmetic device and a storage device (not illustrated). A processor such as a CPU or a GPU can be used as the control arithmetic device. The control arithmetic device reads a program stored in the storage device and performs predetermined arithmetic processing in accordance with the program. Further, the control arithmetic device can write an arithmetic result in the storage device and read information stored in the storage device in accordance with the program. The acquisition unit 212, the determination unit 214, the generation unit 216, and the output unit 219 illustrated in Fig. 1 are various functional blocks implemented by the control arithmetic device.

### (2-2-1) Acquisition Unit

The acquisition unit 212 acquires the diagnostic object information 213 that is information relating to the air conditioner 100. As illustrated in Fig. 1, the acquisition unit 212 acquires the above-described diagnostic object information 213 from the control unit 60 of the air conditioner 100 via the communication line 70. The acquisition unit 212 stores the diagnostic object information 213 in the storage device.

For example, the acquisition unit 212 acquires the diagnostic object information 213 at an interval of one minute for the past three days. For example, the acquisition unit 212 acquires the diagnostic object information 213 stored every one minute for the last three days as a CSV file.

For example, the acquisition unit 212 acquires, as the diagnostic object information 213 relating to the compressor 21, the measurement value of the discharge temperature sensor 33, the measurement value of the discharge pressure sensor 30, the measurement value of the suction pressure sensor 31, and the frequency of current drooping control in the inverter circuit of the compressor motor 21a every one minute.

In addition, for example, the acquisition unit 212 acquires the measurement value of the liquid-side temperature sensor 54, the measurement value of the gas-side temperature sensor 55, the measurement value of the space temperature sensor 56, the operation/stop information on the use unit 50, and the opening degree of the use-side expansion valve 51 every one minute as the diagnostic object information 213 relating to the use-side expansion valve 51.

### (2-2-2) Determination Unit

As illustrated in Fig. 1, the determination unit 214 determines whether each of the diagnostic logics 215 is executable or not based on the diagnostic object information 213.

First, the determination unit 214 selects the diagnostic logics 215 based on the model information 211 included in the diagnostic object information 213. For example, three diagnostic logics 215 are provided for the compressor 21 as follows. The diagnostic logics 215 are described below to determine an abnormality when the following situations apply.
<Diagnostic Logic 215a> A state in which the change in the measurement value of the discharge temperature sensor 33 is xₐ°C or less continues for tₐ or more minutes.
<Diagnostic Logic 215b> A state in which the difference between the measurement value of the discharge pressure sensor 30 and the measurement value of the suction pressure sensor 31 is x_{b} kgf/cm2 or less continues for t_{b} or more minutes.
<Diagnostic Logic 215c> The current drooping control of the inverter circuit continues for t_{c} or more minutes.

Here, xₐ, tₐ, and so forth are certain specific threshold values. The diagnostic logic 215a diagnoses whether the temperature of the discharge pipe 12b is appropriately changed or not by the compressor 21. The diagnostic logic 215b diagnoses whether an appropriate difference is provided between high and low pressures or not by the compressor 21. The diagnostic logic 215c diagnoses whether an appropriate amount of current flows in the inverter circuit of the compressor 21 or not.

Also, for example, two diagnostic logics 215 are provided for the use-side expansion valve 51 as follows.
<Diagnostic Logic 215d> A state in which the value obtained by subtracting the measurement value of the gas-side temperature sensor 55 from the measurement value of the space temperature sensor 56 is less than x_{d}°C and the opening degree of the use-side expansion valve 51 is greater than y_{d} pls continues for t_{d} or more minutes.
<Diagnostic Logic 215e> A state in which the use unit 50 is stopped and the value obtained by subtracting the measurement value of the liquid-side temperature sensor 54 from the measurement value of the space temperature sensor 56 is greater than xₑ°C continues for tₑ or more minutes.

Here, x_{d}, y_{d}, t_{d}, and so forth are certain specific threshold values. The diagnostic logic 215d diagnoses whether the use-side expansion valve 51 is opened in accordance with the control of the control unit 60 or not. The diagnostic logic 215e diagnoses whether the use-side expansion valve 51 is closed in accordance with the control of the control unit 60 or not.

The determination unit 214 determines whether the diagnostic logics 215 are executable or not based on presence or absence of data to be used in the diagnostic logics and/or whether the data is convertible or not. For example, in the diagnostic logic 215a for the compressor 21 described above, in a case where the acquisition unit 212 is not able to acquire the measurement value of the discharge temperature sensor 33 due to a data loss or the like and is not able to acquire a value corresponding to the measurement value of the discharge temperature sensor 33 although another diagnostic object information 213 is converted, the determination unit 214 determines that the diagnostic logic 215a for the compressor 21 is not executable.

### (2-2-3) Generation Unit

As illustrated in Fig. 1, the generation unit 216 generates a diagnostic result 217 including information relating to whether the diagnostic logics 215 are executable or not determined by the determination unit 214. Here, the information relating to whether the diagnostic logics 215 are executable or not includes at least one of the number of the diagnostic logics 215 that could be executed, the ratio of the diagnostic logics 215 that could be executed, the number of the diagnostic logics 215 that could not be executed, and the ratio of the diagnostic logics 215 that could not be executed.

For example, in the diagnostic logics 215 for the compressor 21 described above, the determination unit 214 determines that the diagnostic logic 215a could not be executed because the measurement value of the discharge temperature sensor 33 could not be acquired. In contrast, the determination unit 214 determines that the diagnostic logic 215b and the diagnostic logic 215c could be executed. At this time, in the information relating to whether the diagnostic logics 215 are executable or not, the number of the diagnostic logics 215 that could be executed is 2, the ratio of the diagnostic logics 215 that could be executed is 2/3, the number of the diagnostic logics 215 that could not be executed is 1, and the ratio of the diagnostic logics 215 that could not be executed is 1/3. Hereinafter, the ratio of the diagnostic logics 215 that could be executed is referred to as a logic application ratio.

Further, the diagnostic result 217 may include a ratio of the diagnostic logics 215 that were normal among the diagnostic logics 215 that could be executed. For example, in the above-described example, it is assumed that the diagnostic logic 215b is abnormal because it applies, and the diagnostic logic 215c is normal because it does not apply. At this time, the ratio of the diagnostic logics 215 that were normal among the diagnostic logics 215 that could be executed is 1/2. Hereinafter, the ratio of the diagnostic logics 215 that were normal among the diagnostic logics 215 that could be executed is referred to as a logic normality ratio.

As illustrated in Fig. 1, the generation unit 216 further generates a work instruction 218 corresponding to the diagnostic result 217. For example, as in the above example, when the diagnostic logic 215a could not be executed because the measurement value of the discharge temperature sensor 33 could not be acquired, the generation unit 216 generates a work instruction 218 such that "Data of discharge temperature sensor 33 could not be acquired". Also, for example, when the diagnostic logic 215b is abnormal as in the above example, a work instruction 218 such as "Please repair or replace pressure sensors 30, 31" is generated.

### (2-2-4) Output Unit

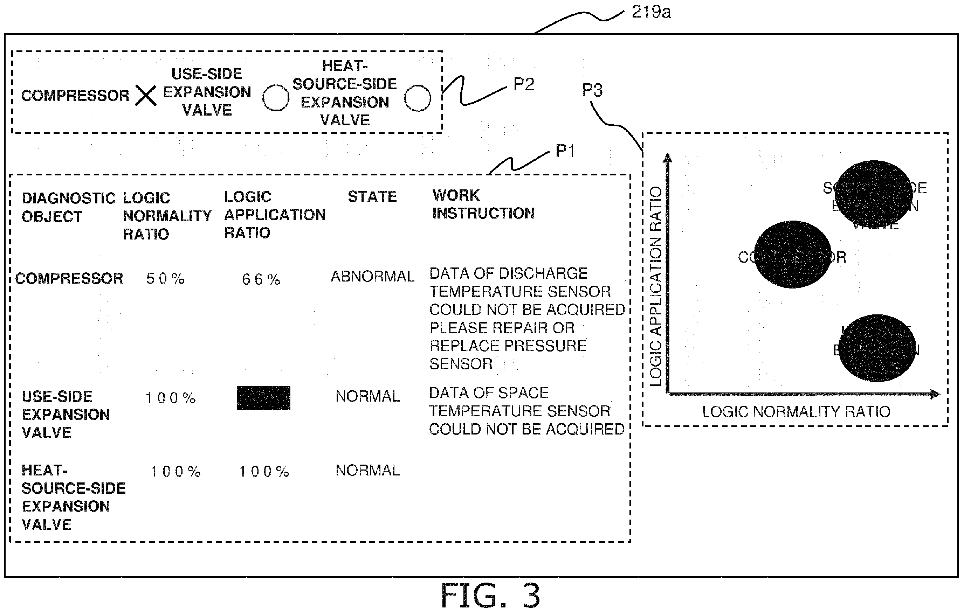

As illustrated in Fig. 1, the output unit 219 outputs the diagnostic result 217 and the work instruction 218 to an output device 219a. In the present embodiment, the output device 219a is a display. Note that the output by the output unit 219 is not limited to screen output, and may be audio output or the like. Fig. 3 illustrates an example of the diagnostic result 217 and the work instruction 218 output to the output device 219a. In Fig. 3, the compressor 21, the use-side expansion valve 51, and the heat-source-side expansion valve 25 are illustrated as diagnostic objects.

In a part P1 of Fig. 3, a logic normality ratio, a logic application ratio, a state, and a work instruction of each diagnostic object are output.

The content of the compressor 21 reflects the foregoing example. The compressor 21 has a logic normality ratio of 50% and a logic application ratio of 66%. Since the logic normality ratio is not 100%, an abnormality is output as the state of the compressor 21. The reason why the logic application ratio is 66% is that the measurement value of the discharge temperature sensor 33 could not be acquired. Thus, "Data of discharge temperature sensor could not be acquired" is output as the work instruction of the compressor 21. Further, the reason why the logic normality ratio is 50% is that the state in which the difference between the measurement value of the discharge pressure sensor 30 and the measurement value of the suction pressure sensor 31 is x_{b} kgf/cm2 or less continues for t_{b} or more minutes. Thus, as an example, "Please repair or replace pressure sensor" is further output as the work instruction of the compressor 21.

Both the use-side expansion valve 51 and the heat-source-side expansion valve 25 have a logic normality ratio of 100%. However, as described above, since the logic normality ratio is the ratio of the diagnostic logics 215 that were normal among the diagnostic logics 215 that could be executed, the reliability of the logic normality ratio of the use-side expansion valve 51 having a logic application ratio (the ratio of the diagnostic logics 215 that could be executed) of 10% is lower than the reliability of the logic normality ratio of the heat-source-side expansion valve 25 having a logic application ratio of 100%.

In a part P2 of Fig. 3, for each diagnostic object, a circle mark is output when the state of the part P1 is normal, and a cross mark is output when the state of the part P1 is abnormal. For example, since the state of the compressor 21 is abnormal, a cross mark is output.

A part P3 of Fig. 3 is obtained by plotting the logic normality ratio and the logic application ratio for each diagnostic object.

The output unit 219 may further output a diagnostic object with a high ratio of the diagnostic logics 215 that could not be executed in an emphasized manner. The diagnostic object with the high ratio of the diagnostic logics 215 that could not be executed is a diagnostic object with a lower logic application ratio than a predetermined value. The predetermined value is, for example, 30%. In the part P1 of Fig. 3, since the logic application ratio of the use-side expansion valve 51 is lower than 30%, the output unit 219 outputs the logic application ratio of the use-side expansion valve 51 with an emphasis by highlighting.

### (3) Diagnostic Process

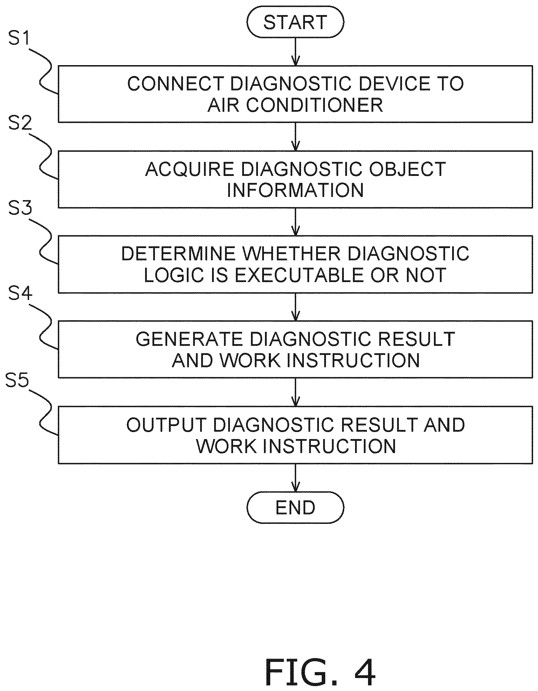

A diagnostic process of the diagnostic system 200 will be described with reference to a flowchart of Fig. 4.

The user connects the diagnostic device 210 to the air conditioner 100 as presented in step S1.

When the diagnostic device 210 is connected to the air conditioner 100, the diagnostic device 210 acquires diagnostic object information 213 as presented in step S2.

When acquiring the diagnostic object information 213, the diagnostic device 210 selects diagnostic logics 215 for each diagnostic object such as the compressor 21 constituting the air conditioner 100, and determines whether the diagnostic logics 215 are executable or not as presented in step S3.

After determining whether the diagnostic logics 215 are executable or not, the diagnostic device 210 generates a diagnostic result 217 and a work instruction 218 as presented in step S4.

When generating the diagnostic result 217 and the work instruction 218, the diagnostic device 210 outputs the diagnostic result 217 and the work instruction 218 to the output device 219a as presented in step S5.

### (4) Features

### (4-1)

In the diagnostic system 200 of the present embodiment, the acquisition unit 212 acquires diagnostic object information 213 that is information relating to a diagnostic object. The determination unit 214 determines whether diagnostic logics 215 are executable or not for each diagnostic object based on the diagnostic object information 213. The generation unit 216 generates a diagnostic result 217 including information relating to whether the diagnostic logics 215 are executable or not. The output unit 219 outputs the diagnostic result 217. Thus, the diagnostic result 217 includes information relating to the diagnostic logics 215 that could not be executed, and the user can more accurately recognize the diagnostic result 217.

### (5) Modifications

### (5-1) Modification 1A

In the present embodiment, the diagnostic device 210 is an independent device separate from the air conditioner 100. However, in the diagnostic system 200, the control unit 60 of the air conditioner 100 may have the function of the diagnostic device 210. As a result, the diagnostic system 200 can diagnose an abnormality of a diagnostic object only by the air conditioner 100.

### (5-2) Modification 1B

In the present embodiment, the diagnostic device 210 is assumed to be a user terminal. However, the diagnostic device 210 may be a server apparatus. In this case, the user accesses the server apparatus from a user terminal using a browser or the like in a form of cloud computing, and diagnoses an abnormality of a diagnostic object. As a result, the diagnostic system 200 can diagnose an abnormality of the diagnostic object without implementing the function of the diagnostic device 210 in the user terminal.

### (5-3) Modification 1C

The air conditioner 100 of the present embodiment is of an individual air conditioning system in which the use unit 50 is installed for each space to be air-conditioned. However, the air conditioner 100 may be of a central air conditioning system in which a heat-source device and an air conditioner are combined to perform air conditioning. Here, the heat source device will be described as a chiller unit 80, and the air conditioner will be described as an air handling unit 90 (hereinafter referred to as an air handling unit 90).

### (5-3-1) General Configuration

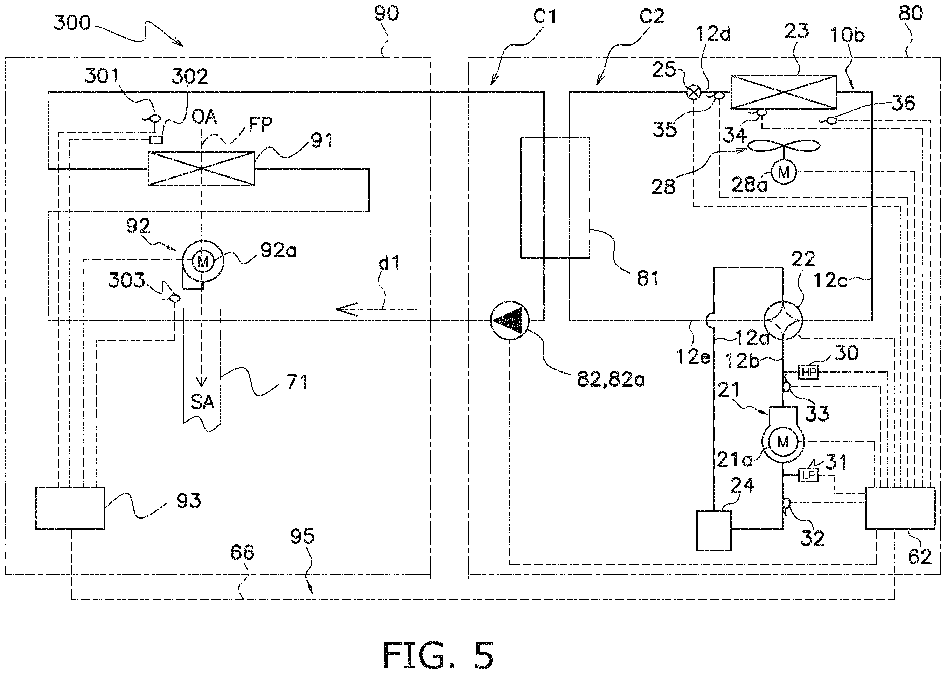

Fig. 5 is a schematic configuration diagram of an air conditioner 300 that is of a central air conditioning system. The air conditioner 300 mainly includes the chiller unit 80, the air handling unit 90, an air supply duct 71, and a control unit 95.

Also, the air conditioner 300 includes a heat medium circuit C1 and a refrigerant circuit C2.

The heat medium circuit C1 is a circuit in which a heat medium that exchanges heat with outside air OA circulates. The heat medium is, for example, water. The heat medium circuit C1 is configured across the chiller unit 80 and the air handling unit 90. The heat medium circuit C1 mainly includes an outside air heat exchanger 91 installed in the air handling unit 90, and a heat medium heat exchanger 81 and a heat medium pump 82 installed in the chiller unit 80. In the heat medium circuit C1, the heat medium flows in a direction indicated by d1 in Fig. 5 by controlling the heat medium pump 82. The flow rate of the heat medium in the heat medium circuit C 1 is mainly adjusted by the number of rotations of the heat medium pump 82.

The refrigerant circuit C2 mainly functions in a manner similar to the heat-source-side refrigerant circuit 10b illustrated in Fig. 2. Differences from the heat-source-side refrigerant circuit 10b illustrated in Fig. 2 are that the refrigerant circuit C2 has circulation in the chiller unit 80, that the refrigerant circuit C2 includes the heat medium heat exchanger 81, and that the refrigerant circuit C2 includes the heat medium pump 82.

### (5-3-2) Detailed Configuration

### (5-3-2-1) Chiller Unit

The chiller unit 80 mainly functions in a manner similar to the heat source unit 20 illustrated in Fig. 2. Differences from the heat source unit 20 illustrated in Fig. 2 are that the refrigerant circuit C2 has circulation in the chiller unit 80, that the refrigerant circuit C2 includes the heat medium heat exchanger 81, and that the refrigerant circuit C2 includes the heat medium pump 82.

The heat medium heat exchanger 81 exchanges heat between a heat medium in the heat medium circuit C1 and a low-pressure refrigerant in the refrigerant circuit C2.

The heat medium pump 82 is installed in the heat medium circuit C1. The heat medium pump 82 sucks and discharges the heat medium during operation. The heat medium pump 82 is driven by a pump motor 82a. The number of rotations of the pump motor 82a can be controlled by an inverter. In addition to the case illustrated in Fig. 2, the heat-source-side control unit 62 is electrically connected to the heat medium pump 82 so as to be able to transmit and receive control signals and information.

### (5-3-2-2) Air Handling Unit

The air handling unit 90 cools or heats the outside air OA. As illustrated in Fig. 5, the air handling unit 90 mainly includes the outside air heat exchanger 91, an air supply fan 92, various sensors, and an air handling control unit 93.

The outside air heat exchanger 91 exchanges heat between the outside air OA and the heat medium in the heat medium circuit C1. The outside air heat exchanger 91 is installed in the heat medium circuit C1.

The air supply fan 92 is a fan that takes in the outside air OA into the air handling unit 90 and sends the outside air OA to the air supply duct 71. In the air handling unit 90, an outside air flow path FP through which the outside air OA flows is formed, and when the air supply fan 92 is driven, the outside air OA flows along the outside air flow path FP. The air supply fan 92 is driven by a fan motor 92a. The number of rotations of the fan motor 92a can be controlled by an inverter.

The air handling unit 90 includes, for example, an outside air temperature sensor 301, an outside air humidity sensor 302, and a supply air temperature sensor 303 as sensors. The outside air temperature sensor 301 detects the temperature of the outside air OA taken into the air handling unit 90. The outside air humidity sensor 302 detects the humidity of the outside air OA taken into the air handling unit 90. The supply air temperature sensor 303 detects the temperature of supply air SA sent to the supply air duct 71.

The air handling control unit 93 controls operations of components constituting the air handling unit 90. The air handling control unit 93 includes a microcomputer provided for controlling the air handling unit 90, a memory in which a control program executable by the microcomputer is stored, and the like. The air handling control unit 93 is electrically connected to the air supply fan 92, the outside air temperature sensor 301, the outside air humidity sensor 302, and the supply air temperature sensor 303 so as to be able to transmit and receive control signals and information. The air handling control unit 93 and the heat-source-side control unit 62 cooperate with each other to function as the control unit 95 that controls the entire operation of the air conditioner 300.

### (5-3-2-3) Intake Duct

The air supply duct 71 is a member that forms a flow path of the outside air OA. One end of the air supply duct 71 is connected to the air handling unit 90 so that the outside air OA flows in when the air supply fan 92 is driven. The other end of the air supply duct 71 is branched into a plurality of branches, and communicates with the space to be air-conditioned at each branch destination.

### (5-3-2-4) Control Unit

The control unit 95 is configured such that a heat-source-side control unit 62 of the chiller unit 80 and the air handling control unit 93 of the air handling unit 90 are communicably connected via a transmission line 66. The control unit 95 controls the entire operation of the air conditioner 300 by the microcomputer of the heat-source-side control unit 62 or the air handling control unit 93 executing the program stored in the memory.

As illustrated in Fig. 5, the control unit 95 is electrically connected to various devices of the chiller unit 80 and the air handling unit 90, including a compressor 21, a flow direction switching mechanism 22, a heat-source-side expansion valve 25, a heat-source-side fan 28, the heat medium pump 82, and the air supply fan 92. Also, as illustrated in Fig. 5, the control unit 95 is electrically connected to various sensors 30 to 36 provided in the chiller unit 80 and the various sensors 301 to 303 provided in the air handling unit 90.

The control unit 95 controls operation and stop of the air conditioner 300 and operations of various devices of the air conditioner 300 based on measurement signals of the various sensors 30 to 36 and 301 to 303 and the like.

Similarly to the control unit 60 illustrated in Fig. 1, the control unit 95 is communicably connected to the diagnostic device 210 of the diagnostic system 200 via the communication line 70.

### (5-4) Modification 1D

In the present embodiment, the diagnostic device 210 calculates the ratio of the diagnostic logics 215 that were normal among the diagnostic logics 215 that could be executed as the logic normality ratio. In other words, this is equivalent to expressing the probability that each diagnostic logic 215 is normal by 0% or 100%, and calculating the logic normality ratio by averaging the probabilities.

However, the probability that each diagnostic logic 215 is normal may be a value from 0% to 100%. For example, the probability that the diagnostic logic 215c described above is normal is 0% when the current drooping control of the inverter circuit continues for t_{c} or more minutes, and 100% when the current drooping control continues for less than t_{c} minutes. In this case, for example, the probability that the diagnostic logic 215c is normal may be set finely, such as 0% when the current drooping control of the inverter circuit continues for t_{c1} or more minutes, 30% when the current drooping control continues for t_{c2} or more minutes, and 50% when the current drooping control continues for t_{c3} or more minutes. In this example, a relationship of t_{c3} < t_{c2} < t_{c1} is established, which indicates that the probability of being normal decreases as the duration of the current drooping control of the inverter circuit is longer.

As a result, the diagnostic device 210 can calculate the logic normality ratio with higher accuracy.

### (5-5)

The embodiment of the present disclosure has been described above, and it is understood that the embodiment and details can be changed in various ways without departing from the gist and scope of the present disclosure described in the claims.

### REFERENCE SIGNS LIST

- 200: diagnostic system
- 211: model information
- 212: acquisition unit
- 213: diagnostic object information
- 214: determination unit
- 215: diagnostic logic
- 216: generation unit
- 217: diagnostic result
- 218: work instruction
- 219: output unit

### CITATION LIST

### PATENT LITERATURE

PTL 1: Japanese Unexamined Patent Application Publication No. 2019-16209

## Claims

1. A diagnostic system (200) that diagnoses an abnormality of a diagnostic object by using a plurality of diagnostic logics (215), comprising:
an acquisition unit (212) that acquires diagnostic object information (213) that is information relating to the diagnostic object;
a determination unit (214) that determines whether each of the diagnostic logics is executable or not based on the diagnostic object information;
a generation unit (216) that generates a diagnostic result (217) including information relating to whether the diagnostic logics determined by the determination unit are executable or not; and
an output unit (219) that outputs the diagnostic result.

2. The diagnostic system according to claim 1, wherein the determination unit determines whether the diagnostic logics are executable or not based on presence or absence of data to be used in the diagnostic logics and/or whether the data is convertible or not.

3. The diagnostic system according to claim 1 or 2,
wherein the diagnostic object information includes model information (211), and
wherein the determination unit selects the diagnostic logics based on the model information.

4. The diagnostic system according to any one of claims 1 to 3, wherein the information relating to whether the diagnostic logics are executable or not includes at least one of a number of the diagnostic logics that could be executed, a ratio of the diagnostic logics that could be executed, a number of the diagnostic logics that could not be executed, and a ratio of the diagnostic logics that could not be executed.

5. The diagnostic system according to any one of claims 1 to 4,
wherein the generation unit further generates a work instruction (218) corresponding to the diagnostic result, and
wherein the output unit further outputs the work instruction.

6. The diagnostic system according to any one of claims 1 to 5, wherein the output unit further outputs the diagnostic object with a high ratio of the diagnostic logics that could not be executed in an emphasized manner.
